# EUROPÄISCHE PATENTSCHRIFT

(11) **EP 2 873 515 B1**
(45) Veröffentlichungstag und Bekanntmachung des Hinweises auf die Patenterteilung: **27.06.2018**
(21) Anmeldenummer: 14003514.8
(22) Anmeldetag: 14.10.2014
(51) Int. Cl.: B29C 70/22, B29B 11/16, D04H 1/645

(54) **VERFAHREN ZUR HERSTELLUNG VON FASERVERBUND-HALBZEUGEN**
METHOD FOR MANUFACTURING SEMI-FINISHED FIBRE COMPOSITES
PROCÉDÉ DE FABRICATION DE DEMI-PRODUITS COMPOSITES FIBREUX

(30) Priorität: 22.10.2013 DE 102013017450
(43) Veröffentlichungstag der Anmeldung: 20.05.2015
(73) Patentinhaber: Airbus Defence and Space GmbH, 85521 Ottobrunn (DE); Airbus Helicopters Deutschland GmbH, 86607 Donauwörth (DE)
(72) Erfinder: Metzner, Christian, 85579 Neubilberg (DE); Beier, Uwe, 85635 Höhenkirchen (DE)
(74) Vertreter: Kastel, Stefan

(56) Entgegenhaltungen:
- EP-A1- 1 908 580
- EP-A1- 1 908 586
- EP-A2- 1 473 132
- DE-A1-102004 017 311
- DE-A1-102011 102 342
- GB-A- 1 387 701
- US-A1- 2007 029 038
- US-A1- 2012 237 707
- US-A1- 2013 244 018

## Beschreibung

Die Erfindung betrifft ein Verfahren zur Herstellung von Faserverbund-Halbzeugen.

Zur Herstellung von Faserverbund-Halbzeugen ist es bekannt, Fäden beziehungsweise Fasern, die in dem Faserverbund-Halbzeug als Verstärkungsfasern wirken sollen, beispielsweise mittels Flechttechnik auf Flechtkernen abzulegen, um so eine Preform, das heißt ein Faserverbund-Halbzeug, herzustellen, das in einem nachfolgendem Verfahren mit Matrixmaterial infiltriert wird, um so ein Faserverbund-Bauteil herstellen zu können. Solche Flechtverfahren sind beispielsweise in DE 10 2009 032 005 A1 und DE 10 2008 052 668 A1 beschrieben.

Alternativ können Faserverbund-Halbzeuge auch in Form von Geweben oder Gelegen erzeugt werden.

Bei allen genannten textilen Herstellungsprozessen ist es bekannt, die textilen Gebilde zu stabilisieren, indem zusätzlich zu den Verstärkungsfasern Garne, beispielsweise aus Nylon (PA, Polyamid) oder Polyester (PET, Polyethylenterphthalat), in das Geflecht/Gewebe/Gelege eingebracht werden. Dies ist beispielsweise aus DE 10 2004 017 311 A1 bekannt. Eine alternative Methode ist das Einbringen von thermoplastischen Vliesen in die Zwischenschichten, meist gebildet aus PA, wie beispielsweise in EP 1 473 132 A2 beschrieben.

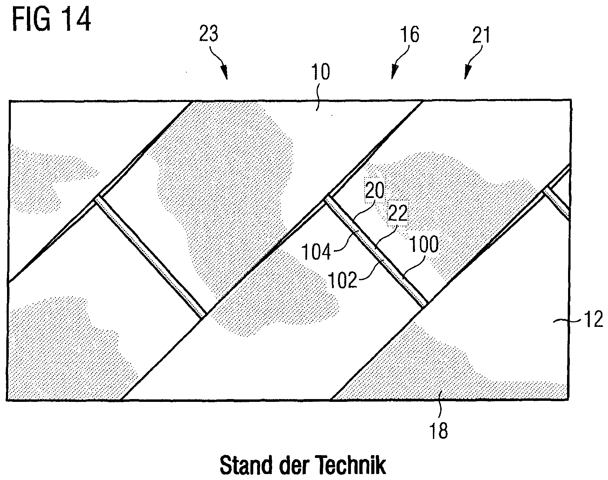

Fig. 14 zeigt ein solches textiles Faserverbund-Halbzeug 10 gemäß dem Stand der Technik. Dabei sind Verstärkungsfasern 12 in dem Faserverbund-Halbzeug 10 unidirektional angeordnet. Um die Verstärkungsfasern 12 bis zum Infiltrationsschritt in ihrer Position zu halten, ist quer zu den Verstärkungsfasern 12 ein Garn 100 angeordnet, meist gebildet aus Serafil 200-2 102 oder Grilon K85 104, Garne 100, die für diese Verwendung gute Eigenschaften zeigen.

Das Einbringen der genannten Garne bringt häufig eine Reduzierung der mechanischen Kennwerte des fertigen Faserverbundbauteils mit sich, wie beispielsweise in dem bislang noch nicht veröffentlichten Paper C. Metzner, U. Beier, P. Middendorf (2013), "A study on the mechanical influence of thermoplastic support-yarns for unidirectional braids" beschrieben ist.

EP 1 908 586 A1, die den Gegenstand des Oberbegriffs des Anspruchs 1 offenbart, befasst sich mit einem Verfahren zum Herstellen von Laminaten, bei welchem Tapes unidirektional in eine Schicht verlegt werden und im Anschluss daran eine zweite Schicht von unilateral verlaufenden Tapes auf die erste gelegt wird. Im Anschluss daran werden diese beiden Schichten miteinander verklebt, wobei Verstärkungsfasern vorhanden sind, die auf mindestens eine Oberfläche des herzustellenden Laminats eingebracht werden können. US 2012/0237707 A1 offenbart ein Kompositmaterial, bei welchem Streifen miteinander verwoben werden und anschließend in einem Matrixmaterial getränkt werden. Die Streifen bestehen dabei aus einer Schicht aus gewobenem Material, die mit einer Schicht aus ungewobenem Material, insbesondere Polymermaterial, verklebt sind.

Aufgabe der Erfindung ist es daher, Faserverbund-Halbzeuge vorzuschlagen, durch die verbesserte mechanische Kennwerte im fertigen Faserverbundbauteil erzielt werden können.

Diese Aufgabe wird durch ein Verfahren zur Herstellung solcher Faserverbund-Halbzeuge gemäß Anspruch 1 gelöst.

Vorteilhafte Ausgestaltungen der Erfindung sind Gegenstand der Unteransprüche. Ein Verfahren zum Herstellen von Faserverbund-Halbzeugen weist die folgenden Schritte auf:
a) Herstellen von Folienbändchen mit den Schritten
   a1) Bereitstellen eines Folienmaterials;
   a2) Schlitzen des Folienmaterials zum Erzeugen der Folienbändchen;
   a3) Dehnen der Folienbändchen mit einer definierten Spannungsbeaufschlagung und/oder einer definierten Temperaturbeaufschlagung.
b) Bereitstellen von Verstärkungsfasern;
c) Anordnen von Folienbändchen und Verstärkungsfasern derart, dass die Verstärkungsfasern unidirektional verlaufen und dass die Folienbändchen die Verstärkungsfasern in ihrer Position in dem Faserverbund-Halbzeug stabilisieren
wobei das Faserverbund-Halbzeug als Gewebe mit den Verstärkungsfasern als Kettfäden und den Folienbändchen als Schussfäden oder als Gelege mit im Wesentlichen parallel verlaufenden Verstärkungsfasern, die mit einer Gegenlage aus Folienbändchen verwirkt sind, oder als Geflecht, bei dem die Verstärkungsfasern in eine erste Richtung und die Folienbändchen in eine zu der ersten Richtung entgegengesetzte zweite Richtung geführt sind, ausgebildet wird.

Insbesondere werden Folienbändchen und Verstärkungsfasern derart angeordnet, dass die Verstärkungsfasern in jeder Verstärkungsfaserlage unidirektional verlaufen.

Es wird vorgeschlagen, Folienbändchen als nicht tragendes Hilfsgarn in einem Faserverbund-Halbzeug zu verwenden. Dabei weist das Faserverbund-Halbzeug eine Vielzahl von unidirektional angeordneten Verstärkungsfasern sowie solche Folienbändchen zum Stabilisieren der Position der Verstärkungsfasern in dem Faserverbund-Halbzeug auf.

Bei bekannten Faserverbund-Halbzeugen, die als beispielsweise Geflecht, Gelege oder Gewebe erzeugt werden, werden Hilfsgarne, das heißt Faserbündel mit rundem Querschnitt, zumeinst aus Nylon oder Polyester, verwendet, um Verstärkungsfasern in ihrer Position in dem Faserverbund-Halbzeug zu halten. Alternativ wird hierzu nun vorgeschlagen, statt der Garne mit rundem Querschnitt Folienbändchen zu verwenden, das heißt flachere, bandförmige Gebilde. Diese bringen gegenüber den üblichen runden Garnen den Vorteil, dass sie aufgrund ihrer flachen Geometrie die Verstärkungsfasern weniger stark ondulieren als die Garne und dadurch eine verbesserte Steifigkeit des fertigen Faserverbund-Bauteils nach Infiltration mit dem Matrixmaterial erzielt werden kann.

Bevorzugt werden die Verstärkungsfasern aus einer Gruppe ausgewählt, die Kohlenstofffasern, Glasfasern, Aramidfasern und Kevlarfasern umfasst.

Bevorzugt wird das Folienbändchen mit einem Material gebildet, das während eines Infiltrationsprozesses eines Faserverbund-Halbzeugs mit Matrixmaterial unlösbar in dem Matrixmaterial ist. Damit kann vorteilhaft eine definierte und reproduzierbare Verteilung der Folienbändchen in dem Faserverbund-Halbzeug auch während der Infiltration mit dem Matrixmaterial beibehalten werden. Beispielsweise wird häufig Hexflow RTM6 als Matrixmaterial verwendet, so dass bevorzugt das Folienbändchen aus einem Material gebildet wird, das in dieser Substanz bei Temperaturen unterhalb der Imprägnierungstemperatur unlösbar ist.

Besonders bevorzugt wird das Material der Folienbändchen derart ausgewählt, dass es in einem Faserverbundbauteil eine Glasübergangstemperatur größer 120° C, insbesondere zwischen 120 °C und 200 °C, aufweist. Insbesondere weist es diese Glasübergangstemperatur bei einer Feuchtigkeit von > 85% relative Feuchte auf.

Weiter bevorzugt ist, wenn das Folienbändchen-Material sich während eines Härtungsprozesses zum Aushärten des Matrixmaterials auflöst und/oder aufschmilzt. Somit kann vorteilhaft erreicht werden, dass im fertigen Faserverbundbauteil deutlich reduzierte Ondulationen in den Verstärkungsfasern im Vergleich zu der Verwendung der üblichen Garne erzielt werden kann, so dass vorteilhaft eine erhöhte Bauteilsteifigkeit erzielt werden kann.

Besonders bevorzugt wird das Material des Folienbändchens derart ausgewählt, dass es einen ähnlichen E-Modul beziehungsweise eine ähnliche Festigkeit hat wie ein für eine Infiltration gewähltes Matrixmaterial, beispielsweise Hexflow RTM6. Somit können bevorzugt interlaminare Schwachstellen in dem fertigen Bauteil vermieden werden.

Vorzugsweise wird das Folienbändchen mit einem thermoplastischen Material gebildet, denn Thermoplaste lassen sich vorteilhaft gut zu Folien verstrecken, die dann einfach mittels Schlitztechnik bevorzugt zu schmalen Folienbändchen verarbeitet werden können. Das thermoplastische Material wird beispielsweise ausgewählt aus der Gruppe, die Polyimid (PI), Polyetherimid (PEI), Polyethersulfon (PES), Polyetherethersulfon (PEES), Polyamid (PA), Polysulfon (PSU) und Polyphenylsulfon (PPS) umfasst, Materialien, die vorteilhaft als Rollenware erhältlich sind.

Bevorzugt weist das thermoplastische Material entlang einer Längenerstreckung des Folienbändchens orientierte Polymerketten auf. Insbesondere ist bevorzugt, wenn das thermoplastische Material eine kristalline Struktur aufweist. Dadurch weist das Folienbändchen vorteilhaft eine höhere spezifische Festigkeit auf, als wenn das thermoplastische Material im amorphen Zustand in dem Folienbändchen vorliegt.

Vorzugsweise weist das gedehnte Folienbändchen abgerundete Kanten auf, so dass eine potentielle Faserschädigung der Verstärkungsfasern in dem Faserverbund-Halbzeug bei Kontakt mit den Kanten des Folienbändchens vorteilhaft reduziert werden kann.

Weiter bevorzugt weist das gedehnte Folienbändchen im Inneren Mikrorisse auf, so dass sich die Oberfläche des Folienbändchens vorteilhaft vergrößert und eine verbesserte Anbindung mit dem zu infiltrierenden Matrixmaterial ermöglicht wird.

In besonders bevorzugter Ausführungsform wird das Folienbändchen auf eine Dickenerstreckung von 3 µm bis 30 µm und/oder eine Breitenerstreckung von 0,2 mm bis 3 mm gedehnt.

Ist das Faserverbund-Halbzeug als Geflecht ausgebildet, ist es bevorzugt, wenn das Geflecht mehrere Flechtlagen aufweist.

Besonders bevorzugt ist es, wenn die Folienbändchen im Wesentlichen senkrecht, insbesondere in einem Winkel von 45° bis 90°, zu den Verstärkungsfasern in dem Faserverbund-Halbzeug angeordnet werden.

Bevorzugt wird ein amorphes Folienmaterial mit 5 µm bis 50 µm Foliendicke gefertigt.

Weiter vorteilhaft wird in Schritt a2) das Folienbändchen mit einer Breitenerstreckung von 0,5 mm bis 7 mm erzeugt.

Besonders bevorzugt wird in Schritt a3) die Temperaturbeaufschlagung in einem Bereich von 30° C bis 250° C gewählt. So wird bevorzugt eine maximale Zugfestigkeit und vorteilhaft ein reproduzierbarer Dehnprozess erzielt.

Vorteilhaft wird in Schritt a3) die Spannungsbeaufschlagung derart gewählt, dass sich die Folienbändchen im Wesentlichen in ihrer Längenerstreckung verdoppeln, in ihrer Dickenerstreckung halbieren und in ihrer Breitenerstreckung um etwa 2/3 reduzieren.

Weiter bevorzugt wird Schritt a2) vor Schritt a3) durchgeführt, da hierdurch die Verarbeitbarkeit der Folienbändchen vorteilhaft erhalten bleibt.

Ein Ausführungsbeispiel der Erfindung wird nachfolgend anhand der beigefügten Zeichnungen näher erläutert. Darin zeigt:
- Fig. 1: ein Faserverbund-Halbzeug mit Folienbändchen zum Stabilisieren von unidirektional angeordneten Verstärkungsfasern;
- Fig. 2: ein Faserverbund-Halbzeug mit Verstärkungsfasern und Matrixmaterial;
- Fig. 3: die Morphologie eines Folienbändchens aus Fig. 1 vor (a)) und nach (b)) einer Dehnung des Folienbändchens;
- Fig. 4: die Kantenbeschaffenheit des Folienbändchens aus Fig. 3 vor (a)) und nach (b)) einer Dehnung des Folienbändchens;
- Fig. 5: ein Diagramm, das die Zugfestigkeit unterschiedlicher Materialien darstellt;
- Fig. 6: ein weiteres Diagramm, das die Zugfestigkeiten unterschiedlicher Materialien miteinander vergleicht;
- Fig. 7: ein Diagramm, das Ondulationswinkel der Verstärkungsfasern bei Verwendung unterschiedlicher Materialien darstellt;
- Fig. 8: ein Stauchschliffbild bei Verwendung von Serafil 200-2 als Hilfsgarn;
- Fig. 9: ein Stauchschliffbild bei Verwendung von Grilon K85 als Hilfsgarn;
- Fig. 10: ein Stauchschliffbild bei Verwendung von PEI-Folienbändchen als Hilfsgarn;
- Fig. 11: ein Diagramm, das die Druckfestigkeiten bei Verwendung unterschiedlicher Materialien darstellt;
- Fig. 12: ein Diagramm, das die Schadensflächen nach Schlagstoß bei Verwendung von Folienbändchen unterschiedlicher Materialien darstellt;
- Fig. 13: ein Diagramm, das die Restdruckfestigkeit bei Verwendung von Folienbändchen unterschiedlicher Materialien darstellt; und
- Fig. 14: ein Faserverbund-Halbzeug nach dem Stand der Technik.

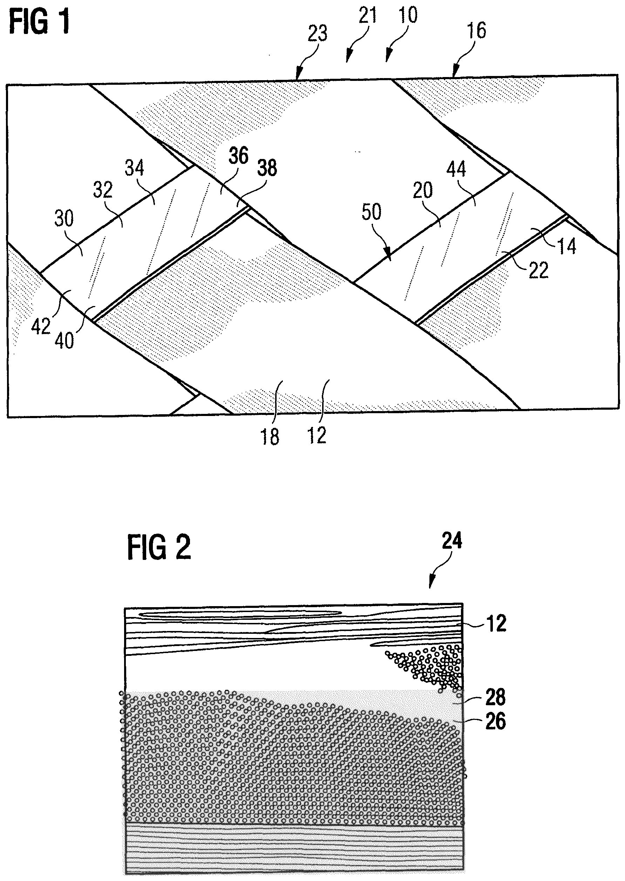

Fig. 1 zeigt ein Faserverbund-Halbzeug 10, das eine Vielzahl von unidirektional angeordneten Verstärkungsfasern 12 sowie Folienbändchen 14 aufweist, um die Verstärkungsfasern 12 in dem Faserverbund-Halbzeug 10 in Position zu halten.

Das Faserverbund-Halbzeug 10 ist als Gewebe 16 ausgebildet, wobei die Verstärkungsfasern 12 als Kettfäden 18 und die Folienbändchen 14 als Schussfäden 20 verwendet wurden. Das Faserverbund-Halbzeug 10 kann jedoch auch als Gelege 21 ausgebildet sein, wobei die Verstärkungsfasern 12 im Wesentlichen parallel verlaufen und die Folienbändchen 14 eine Gegenlage bilden, um so Schlaufen 22 zu erzeugen, mit denen die Verstärkungsfasern 12 verwirkt werden können. Bei den Gelegen 21 sind die Folienbändchen 14 nicht verwebt, sondern liegen als Lage vor, die mittels Nähtechnik miteinander verbunden werden. Ist das Faserverbund-Halbzeug 10 alternativ als Geflecht 23 ausgebildet, wird es durch übliche Flechttechnik gebildet, wobei die Verstärkungsfasern 12 in eine Richtung entgegengesetzt zu den Folienbändchen 14 geführt werden.

Fig. 2 zeigt einen Ausschnitt aus einem Faserverbundbauteil 24, das durch Infiltration des Faserverbund-Halbzeugs 10 mit einem Matrixmaterial 26 und anschließendes Aushärten erzeugt worden ist.

Das Material der Folienbändchen 14 in Fig. 1 hat einen ähnlichen E-Modul beziehungsweise eine ähnliche Festigkeit wie das Matrixmaterial 26, beispielsweise Hexflow RTM6 28. Geeignete Materialien sind thermoplastische Materialien 30 wie beispielsweise Poly(ether)imid (PI, PEI) 32, Polyethersulfon (PES) 34, Polyetherethersulfon (PEES) 36, Polyamid (PA) 38, Polysulfon (PSU) 40 und Polyphenylsulfon (PPS) 42.

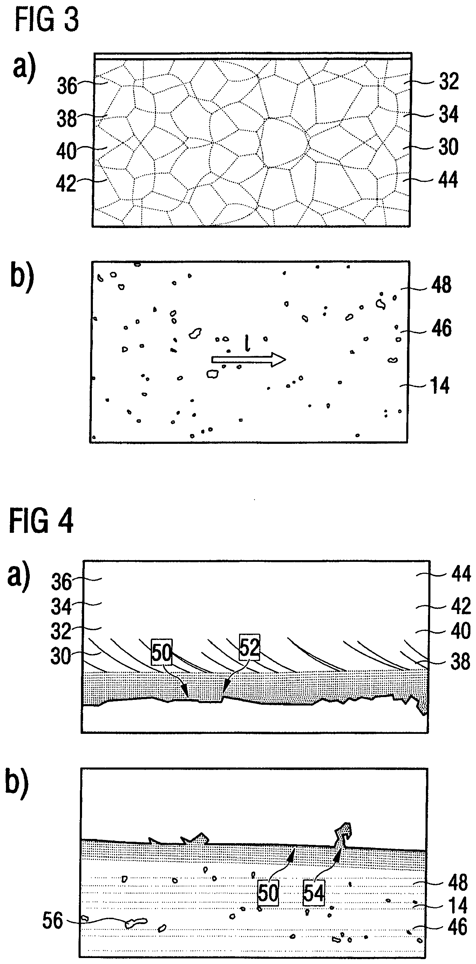

Zur Herstellung der Folienbändchen 14 wird eines der genannten Materialien als Folienmaterial 44 bereitgestellt dargestellt in Fig. 3a. Das so hergestellte amorphe Folienmaterial 44 wird dann geschlitzt, das heißt zerteilt, um die Folienbändchen 14 zu bilden. Danach werden diese Folienbändchen 14 mit einer definierten Spannungsbeaufschlagung beziehungsweise unter einer bestimmten Temperaturbeaufschlagung gedehnt, so dass eine Struktur 46 mit ausgerichteten Polymerketten entsteht, gezeigt in Fig. 3b. In der ausgerichteten Struktur 46 sind Polymerketten 48 in dem Folienmaterial 44 entlang einer Längenerstreckung I des Folienbändchens 14 orientiert beziehungsweise ausgerichtet.

Durch die Dehnung der Folienbändchen 14 verändert sich auch die Struktur an einer beziehungsweise den Kanten 50 der Folienbändchen 14. Wie in Fig. 4a zu sehen, weisen die Folienbändchen 14 aus dem noch im amorphen Zustand befindlichen Folienmaterial 44 scharfe, raue Kanten 52 auf. Dahingegen weisen die gedehnten Folienbändchen 14 glatte, abgerundete Kanten 54 auf. Weiter können sich, wie in Fig. 4b zu sehen, Mikrorisse 56 in den Folienbändchen 14 in Längsrichtung ausbilden, die die Oberfläche der Folienbändchen 14 vergrößern und somit eine verbesserte Anbindung nach der Infusion mit Matrixmaterial 26 bieten.

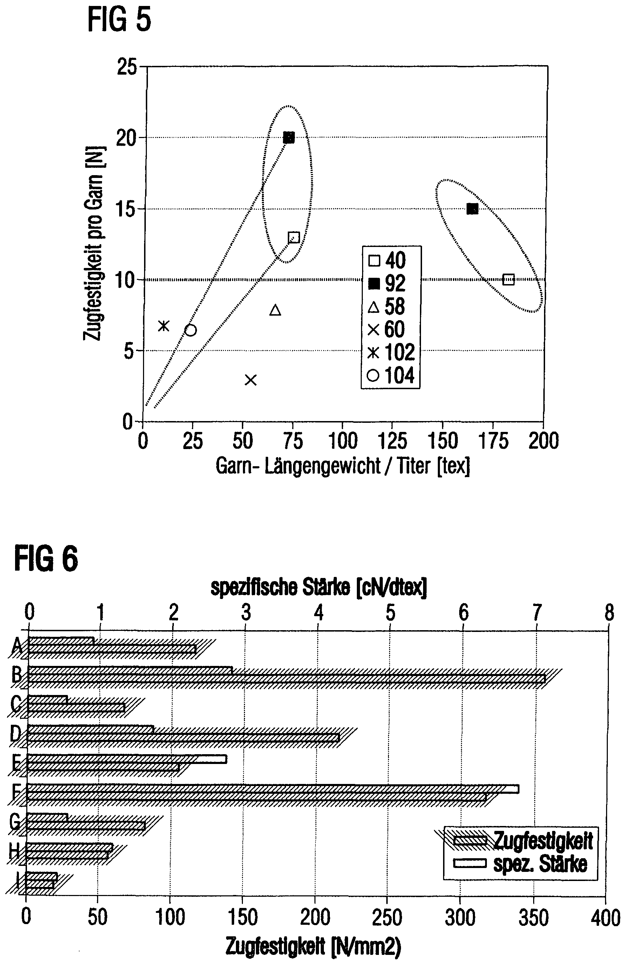

Fig. 5 zeigt ein Diagramm, in dem verschiedene Garne 100 wie Serafil 200-2 102, Grilon K85 104, PES_1 58 und PES_2 60 mit unterschiedlichen Folienbändchen-Materialien wie Polysulfon 40 und Polyetherimid 32 verglichen werden. Aufgetragen ist dabei die Zugfestigkeit pro Material in N gegen das Garn-Längengewicht/Titer in tex. Die gestrichelte Linie zeigt die erfahrungsgemäß minimale Zugfestigkeit für unidirektionale Geflechte 23. Für Polysulfon 40 und Polyetherimid 32 ist im rechten eingekreisten Bereich der Ausgangszustand, das heißt vor Dehnung der Folienbändchen 14, und im linken eingekreisten Bereich der Endzustand, das heißt nach Dehnung der Folienbändchen 14, dargestellt.

Fig. 6 zeigt ein Balkendiagramm zur Darstellung der Zugfestigkeit in N/mm² (ausgefüllte Balken) und der spezifischen Stärke in cN/dtex (unausgefüllte Balken) für verschiedene Materialien. Es sind dabei in den Reihen A bis D die Werte für die verwendeten Folienbändchen 14 gezeigt. In Reihe A sind dabei die Werte für einen nicht gedehnten Polyetherimid-Film, in Reihe B die Werte für einen gedehnten Polyetherimid-Film gezeigt. Analog zeigen die Reihen C und D die Werte für einen ungedehnten Polysulfon-Film beziehungsweise einen gedehnten Polysulfon-Film.

Die Reihen E und F zeigen die Werte für für den Verarbeitungsprozess optimierte Garne, nämlich Grilon K85 104 (Reihe E) und Serafil 200-2 102 (Reihe F). Die Reihen G bis I zeigen die mechanischen Kennwerte von optimierten Garnen, nämlich PES_2 60 (Reihe G), PES_1 58 (Reihe H) und PEI 32 (Reihe I).

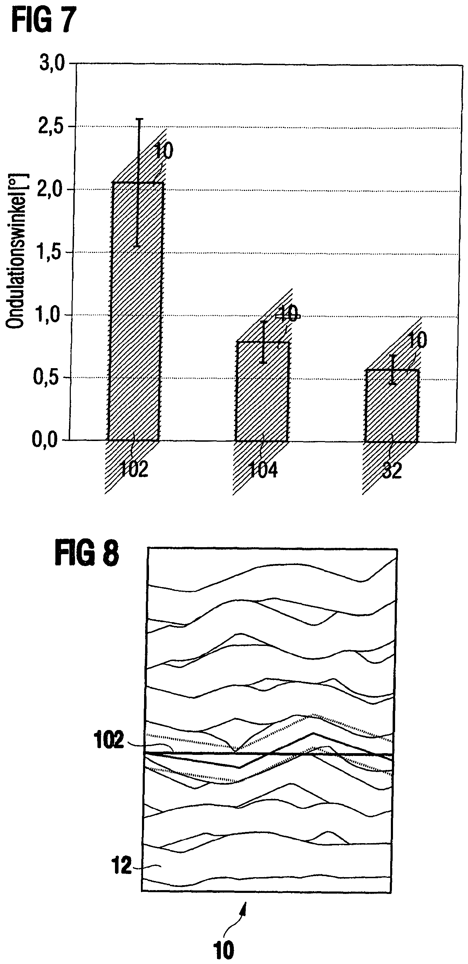

Fig. 7 zeigt eine Abschätzung der Ondulationswinkel in unidirektionalen Geflechten 23, das heißt der maximalen Fehlorientierung der Verstärkungsfaserlagen 12 zum einen für Faserverbund-Halbzeuge 10, bei denen übliche Garne 100 wie Serafil 200-2 102 und Grilon K85 104 verwendet worden sind, als auch bei solchen, bei denen Polyetherimid-Folie 32 verwendet worden ist.

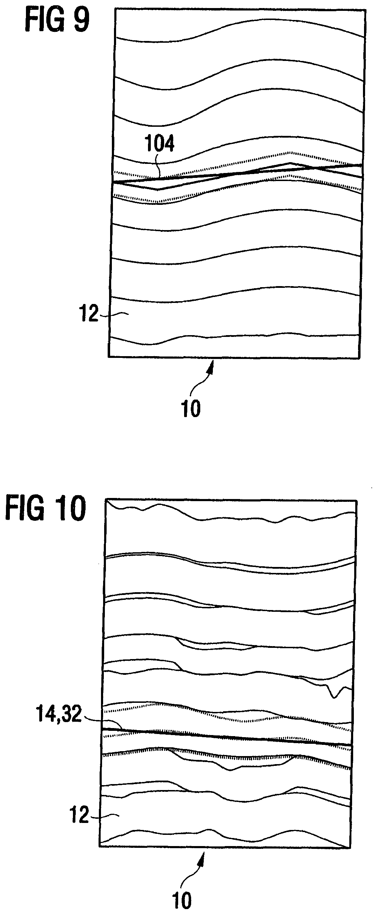

Fig. 8 zeigt ein Stauchschliffbild für Verwendung von Serafil 200-2 102 in einem Faserverbund-Halbzeug 10. Fig. 9 zeigt ein Stauchschliffbild für die Verwendung von Grilon K85 104 in einem Faserverbund-Halbzeug 10. Fig. 10 zeigt die Verwendung von Folienbändchen 14 aus Polyetherimid 32-Folie in einem Faserverbund-Halbzeug 10. In allen Stauchschliffbildern ist das Verhältnis Höhe 1x, Breite x 0,1 gewählt.

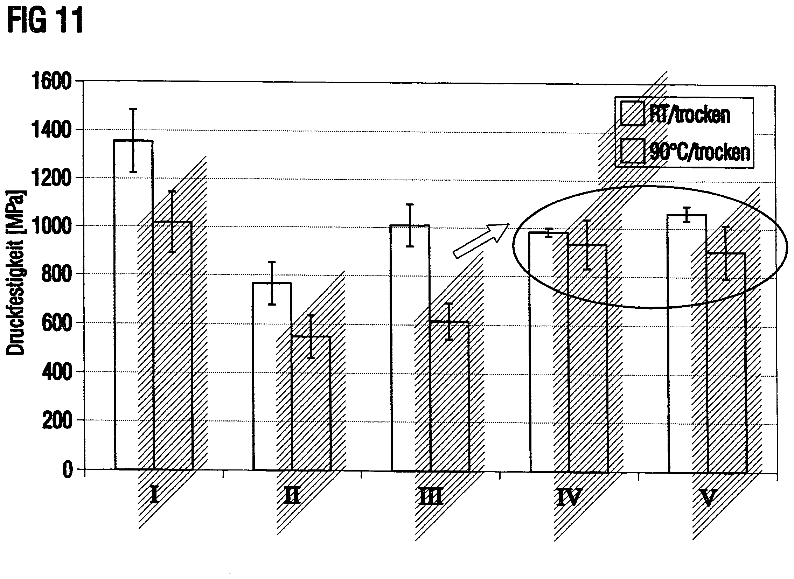

Fig. 11 zeigt ein Balkendiagramm, das die Druckfestigkeiten von unidirektionalen Geflechten 23 bei Raumtemperatur und bei 90° C in Abhängigkeit der verwendeten Materialien zeigt. Die Druckfestigkeiten sind dabei in MPa angegeben. Die ausgefüllten Diagramme zeigen Geflechte 23 bei 90° C im trockenen Zustand, die nicht ausgefüllten Balken Geflechte 23 bei Raumtemperatur im trockenen Zustand. Balken I zeigt dabei die unidirektionale Faserverbund Referenz, nämlich mit dem Matrixmaterial 26 Hexflow RTM6. Folgende Balken repräsentieren die Druckfestigkeit von Unidirektionalgeflecht 23 mit gleichen Fertigungsparametern und Verstärkungsfasern 12 aber unterschiedlichen Stützgarnen 100. Balken II zeigt Serafil 200-2 102 mit einem Massenanteil von 1,3% des Wertes von RTM6. Balken III zeigt Grilon K85 104 mit einem Massenanteil von 2,9% des Wertes von RTM6. Balken IV zeigt einen Polysulfon 40-Film mit einem Massenanteil von 11,4% des Wertes von RTM6. Balken V zeigt die Werte von Polyetherimid 32-Film mit einem Wert von 10,3% des Wertes von RTM6. Insbesondere bei 90° C zeigen die Folienbändchen 14 (Balken IV und V) eine Verbesserung gegenüber den Garnen 100 nach dem Stand der Technik (Balken II und III), wie durch den eingekreisten Bereich verdeutlicht wird.

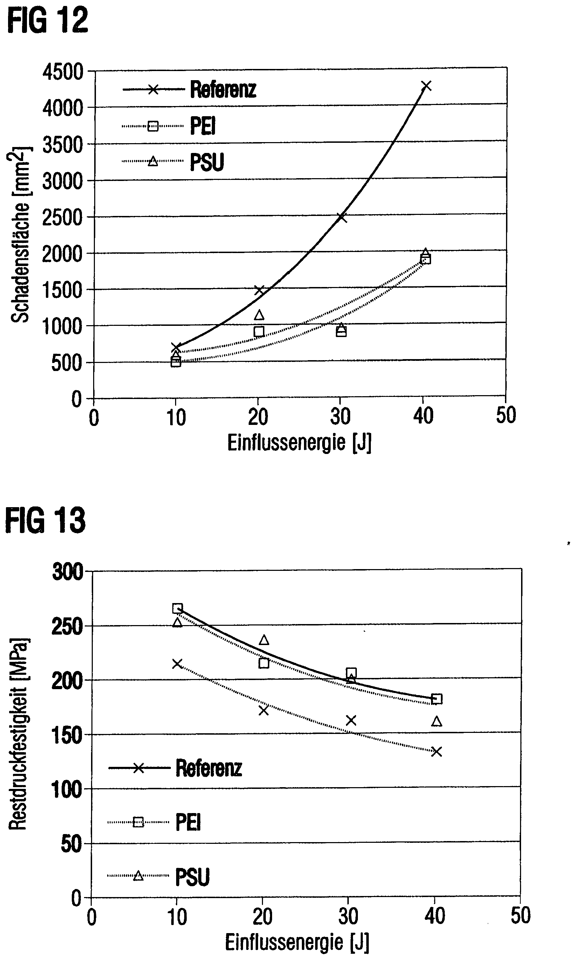

Fig. 12 zeigt die Schadensflächen nach einem Impact-Test gemäß AITM 1.0010, wobei die Schadensflächen in mm² gegen die Einflussenergie in J aufgetragen worden sind. Die Kreuze zeigen das Diagramm für eine Referenz, wobei die Quadrate die Ergebnisse für Polyetherimid 32-Folien und die Dreiecke die Ergebnisse für Polysulfon 40-Folien zeigen.

Fig. 13 zeigt die Restdruckfestigkeit von Faserverbund-Halbzeugen 10 gemäß Impact-Test nach AITM 1.0010. Dabei ist die Restdruckfähigkeit in MPa gegen die Einflussenergie in J aufgetragen. Die Kreuze zeigen die Werte einer Referenz, während die Quadrate die Werte eines Polyetherimid 32-Folienbändchens 14 und die Dreiecke die Werte eines Polysulfon 40-Folienbändchens 14 zeigen.

Somit werden hier geschlitzte Folien in Form von Folienbändchen 14 zur Herstellung textiler Faserverbund-Halbzeuge 10 für Faserverbundbauteile 24 mit verbesserten Kennwerten beschrieben.

Derzeitig werden altbekannte textile Prozesse wie Weben oder auch Flechten angepasst und weiterentwickelt, um kostengünstige Faserverbundbauteile 24 für zivile Luftfahrzeuge herzustellen. Mittels textiler Prozesse werden direkt aus den Verstärkungsfasern 12 die Faser-Preforms hergestellt, die in einem weiteren Schritt mit der Matrix aus Matrixmaterial 26 imprägniert und im Ofen ausgehärtet werden. Zur Stabilisierung der textilen Gebilde werden aus prozesstechnischen Gründen meist Garne 100 und Zwirne aus Nylon (PA) oder Polyester (PET) verwendet, die im ausgehärteten Bauteil 24 jedoch eine Reduzierung der mechanischen Kennwerte bewirken, wie in C. Metzner, U. Beier, P. Middendorf (2013), "A study on the mechanical influence of thermoplastic support-yarns for unidirectional braids", DRAFT-Version (siehe Anlage 1) beschrieben.

Hingegen gäbe es Ansätze, die mechanischen Kennwerte, insbesondere die Schlagzähigkeit, mit Zuschlagstoffen aus Polymerwerkstoffen zu verbessern bzw. zumindest nicht negativ zu beeinflussen. Hierzu können z.B. Pulver aus PEI 32, PES 36, PSU 40 o.ä. direkt in das Harzsystem eingemischt oder in die Faser-Preform eingebracht werden, um die Zähigkeit der Matrix im ausgehärteten Bauteil 24 zu erhöhen. Dies ist beispielsweise in L.-J. Vandi, M. Hou, et al. (2012); Interphase diffusion and morphology of aerospace grade epoxy co-cured with thermoplastic polymers; ICAS 2012 und M. Zhang (2003), A review of the Epoxy resin toughening, PhD Syracuse University beschrieben.

Des Weiteren hat sich das Einbringen von thermoplastischen Vliesen in die Zwischenschichten (meist PA 38, beschrieben in EP 1 473 132 A2) als gut geeignete Methode zur Verbesserung der Schadenstoleranz erwiesen.

Erstrebenswert wäre es somit, die nichttragenden Hilfsgarne 100 so optimieren, dass die folgenden Anforderungen aus dem textilen Fertigungsprozess und aus dem ausgehärteten Bauteil 24 erfüllt werden:

### 1. Anforderungen textiler Fertigungsprozess:

- hohe Zugfestigkeit;
- geringer Garndurchmesser;
- geringe Reibung;
- flacher Querschnitt, um die Faserondulation in den Verstärkungsfasern 12 zu reduzieren.

### 2. Anforderungen an das Hilfsgarn im Bauteil 24:

- definiert reproduzierbare Verteilung, d.h. keine Lösung in Matrix während der Infusion (Wash-out);
- gute Matrixanbindung d.h. an- oder auflösen bzw. aufschmelzen des Hilfsgarns 100 während des Aushärteprozess erwünscht (aktive Oberfläche);
- hohe chemische Resistenz;
- Tg > ca. 120 °C (wet) im Composite;
- hohe Bruch-/Schlagzähigkeit, Modul/Festigkeit auf Level der Matrix, um interlaminare Schwachstellen zu vermeiden.

Polymere wie PEI 32, PSU 40 oder auch PES 34 zeigen als Garn 100 eine geringere Verarbeitbarkeit hinsichtlich Zugfestigkeit als die Folienmaterialien 44, wie aus Fig. 6 ersichtlich ist. Die genannten Thermoplaste, d.h. PEI 32 und PSU 40, lassen sich hingegen gut zu Folien verstrecken, welche folgend mittels Schlitztechnik zu schmalen Folienbändchen 14 verarbeitet werden können. Ein Vorgehen zur Herstellung der Folienbändchen 14 kann wie folgt aussehen:
1. Herstellung von Folienmaterial aus einem gewählten Polymer (z.B. Polyethersulfon 34, Polyetherethersulfon 36, Polyetherimid 32, Polysulfon 40, Polyphenylsulfon 42, Polyamide 38 oder auch PES 34/PEES 36) zu einem gebräuchlichen Dickenbereich 10 µm bis 50 µm;
2. Schlitzen der Folie zu Folienbändchen 14 (0,5 mm bis 7 mm);
3. Reckprozess, d.h. Dehnen, bei definierter Spannung und Temperatur zu gereckten Folienbändchen 14, wodurch sich der Querschnitt, die Morphologie, die Zugfestigkeit reproduzierbar ändern.

Diese Folienbändchen 14 können als neuartige Hilfsgarne 100 während der textilen Prozesse wie z.B. UD (unidirektional)-Flechten (siehe Fig. 11) eingesetzt werden und zusätzlich das ausgehärtete Bauteil 24 positiv funktionalisieren. Durch den Reckprozess reduziert sich einerseits die Foliendicke und -breite, die Zugfestigkeit hingegen steigt deutlich. Als Ursache hierfür kann die Orientierung der Polymerketten 48 genannt werden. Das gereckte Bändchen 14 zeigt neben den primären Veränderungen wie erhöhte Zugfestigkeit auch noch sekundäre Verbesserungen:
- Eine Erhöhung der Polymerketten 48-Ausrichtung kann die Beständigkeit gegen aggressive Medien verbessern, weshalb ein möglicher Wash-out des funktionalisierenden Zuschlagstoffes während der Harzinfusion vorteilhaft reduziert werden kann.
- Während des Reckprozesses entstehen Mikrorisse 56 im Bändchen 14 in Reckrichtung, wodurch die Anbindung nach der Harzinfusion durch Vergrößerung der Oberfläche verbessert wird.
- Die scharfen Kanten 52 des geschlitzten Folienbändchens 14 werden durch den Reckprozess deutlich abgerundet, wodurch die Faserschädigung beim textilen Verarbeitungsprozesses reduziert wird.
- Der Reckprozess erhöht die Längsfestigkeit und Steifigkeit, aber auch die Kennwerte in Querrichtung steigen, weshalb Verdreher und Knicke während des textilen Prozesses reduziert werden.

Als mögliche Einsatzgebiete für geschlitzte funktionalisierte Folienbändchen 14 können unter anderem folgende Textiltechniken genannt werden:
1. UD-Gewebe 16:
   Im Beispiel Hexflow RTM6 28 werden Glasfaser-Garne 100 als Schuss 20 verwendet. Durch die Gewebestruktur werden Faserwelligkeiten relativ der Dicke der Garne 100 generiert bzw. durch die Wahl des Garnmaterials können keine zusätzlichen Funktionen im ausgehärteten Bauteil 24 erzielt werden. Dünne FolienBändchen 14 als Schussfaden 20 könnten einerseits die Faserwelligkeit reduzieren bzw. zusätzlich die Matrix schlagzäh modifizieren.
2. Gelege 21:
   Gelege 21 werden mittels Binder konsolidiert, was z.B. durch BAFATEX-Gitter oder auch durch Verwirken erreicht wird. Um 0°-Gelege 21 zu verwirken ist eine Gegenlage für die Schlaufenbildung 22 notwendig, wofür untergelegte Folienbändchen 14 eine Lösung bieten. Folienbändchen 14 können in diesem Anwendungsbeispiel gegebenenfalls eine geringe Verbesserung der Risszähigkeit erzielen.
3. UD-Geflecht 23:
   Ersatz für bisherige Stützgarne 100 wie nachfolgend beschrieben.

Grundsätzlich sind die gereckten Folienbändchen 14 als Weiterentwicklung der Stützgarne 100 für den UD-Flechtprozess verwendbar. Die aktuellen Standard-Stützgarne 100 Serafil 200-2 102 (PET) bzw. auch Grilon K85 104 (Co-PA) zeigen durch ihre sehr gute spezifische Zugfestigkeit eine hervorragende Verarbeitbarkeit, reduzieren aber aus individuellen Gründen die mechanischen Kennwerte, insbesondere die Druck- und Schubfestigkeiten bei erhöhten Temperaturen und Feuchte, wie z.B. in C. Metzner, U. Beier, P. Middendorf (2013), A study on the mechanical influence of thermoplastic support-yarns for unidirectional braids DRAFT-Version (siehe Anlage 1) beschrieben. Durch den relativ hohen Garndurchmesser von ca. 100 µm werden die Verstärkungsfasern 12 bereits während der Faserablage stark onduliert, weshalb die Bauteilsteifigkeit reduziert wird. Grilon K85 104 schmilzt während des Herstellungsprozesses auf, wodurch sich die Faserondulation in gewissem Maße entspannen kann und die Druckfestigkeiten gegenüber den Serafil 200-2 102 - Werten vorteilhaft beeinflusst. Die hot/wet-Druckfestigkeiten sind aber dennoch reduziert, da Grilon K85 104 auf Grund der Co-PA-Materialbasis bereits ab ca. 40 °C bis 50 °C erweicht und somit auch die Beulsteifigkeit der C-Fasern negativ beeinflusst (siehe Fig. 11).

Als Verbesserung wurden 50 µm starke amorphe Folien 44 aus PEI 32 und PSU 40 zu 3,0 mm Bändchen 14 geschlitzt und auf einer Umspulmaschine kontinuierlich gereckt. Eine optimale Temperatur während des Reckprozesses wurde mit 50 °C bis 150 °C angesetzt. Höhere Temperaturen können die Zugfestigkeit reduzieren bzw. geringere Temperaturen erschweren einen reproduzierbaren Reckprozess. Ein Über- oder Unterschreiten des Temperaturbereichs kann zu Folienbruch führen. Die Spannung wurde in dem Maße eingestellt, dass ein maximales Verstreckungsverhältnis von 1:2, d.h. 100% Dehnung erreicht wurde. Durch das Verstrecken verdreifacht sich die spezifische Festigkeit des Folienbändchens 14, die Foliendicke halbiert sich bzw. die Folienbreite reduziert sich ca. um 30 %. Morphologische Untersuchungen unter polarisiertem Licht (Figs. 3a, 3b) zeigen eine eindeutige Erhöhung der Ausrichtung der Polymerketten 48. Des Weiteren werden durch den Reckprozess die scharfen Kanten 52 des geschlitzten Bändchens 14 geglättet (Figs. 4a, 4b, wodurch eine potentielle Faserschädigung der Verstärkungsfasern 14 reduziert werden kann. Eine Übersicht über die genannten Vorteile zeigt Fig. 5. Schlussfolgernd ist es empfehlenswert, die amorphen Folien 44 erst zu schlitzen und dann zu verstrecken, da hierdurch die Verarbeitbarkeit des Bändchens 14 steigt.

Die Folienbändchen 14 wurden auf der Flechtanlage von EADS IW mit TohoTenax HTS40 E23 12K unidirektional verflochten (Set-up 72 : 36). Für 0°- und 90°-Lagen können während des Prozesses zusätzliche UD-Tapes (0°) oder Wickellagen (90°) eingebracht werden. Die Lagenfolge wird vorteilhaft so gewählt, dass jede Zwischenlage mit "Stützgarnmaterial" funktionalisiert wird, d.h. Geflecht-Lage auf Geflecht-Lage bzw. Geflecht-Lage auf UD-Tape oder Geflecht-Lage auf Wickellage. Wickellage auf UD-Tapelage sollte bevorzugt vermieden werden, da hierbei zähmodifizierendes Material in der Zwischenlage eingebracht werden kann. Die Harzinfusion und Härtung mit dem Matrixmaterial 26 Hexflow RTM6 gemäß VAP (Vakuuminfusion) wurde im Ofen gemäß der Standardvorgaben durchgeführt.

Die Folienbändchen PSU 40 und PEI 32 lösen sich während des Härtungszyklus auf, wodurch im fertigen Laminat deutlich reduzierte Ondulationswinkel im Vergleich zu den Garnansätzen messbar sind (siehe Schliff/Stauchbilder in Figs. 8 - 10). Die Druckfestigkeiten der Foliengeflechte 23 erreichen hierdurch ein erheblich verbessertes Niveau (Fig. 11), besonders bei erhöhten Temperaturen, was mit der optimierten Bändchengeometrie, aber auch mit den verbesserten Materialeigenschaften von PEI 32 und PSU 40 zu begründen ist. Des Weiteren ist die Schadensresistenz signifikant verbessert, weshalb kleinere Schadensflächen bzw. folgend auch verbesserte Restdruckfestigkeiten erzielt werden können.

### Bezugszeichenliste:

- 10: Faserverbund-Halbzeug
- 12: Verstärkungsfaser
- 14: Folienbändchen
- 16: Gewebe
- 18: Kettfaden
- 20: Schussfaden
- 21: Gelege
- 22: Schlaufe
- 23: Geflecht
- 24: Faserverbundbauteil
- 26: Matrixmaterial
- 28: Hexflow G1157
- 30: thermoplastisches Material
- 32: Polyetherimid
- 34: Polyethersulfon
- 36: Polyetherethersulfon
- 38: Polyamid
- 40: Polysulfon
- 42: Polyphenylsulfon
- 44: Folienmaterial
- 46: ausgerichtete Struktur
- 48: Polymerketten
- 50: Kante
- 52: raue Kante
- 54: abgerundete Kante
- 56: Mikroriss
- 58: PES_1
- 60: PES 2
- 100: Garn
- 102: Serafil 200-2
- 104: Grilon K85
- I: Längenerstreckung

## Patentansprüche

1. Verfahren zum Herstellen von Faserverbund-Halbzeugen (10) mit den Schritten:
a) Herstellen von Folienbändchen (14) mit den Schritten
a1) Bereitstellen eines Folienmaterials (44);
a2) Schlitzen des Folienmaterials (44) zum Erzeugen der Folienbändchen (14);
a3) Dehnen der Folienbändchen (14) mit einer definierten Spannungsbeaufschlagung und/oder einer definierten Temperaturbeaufschlagung.
b) Bereitstellen von Verstärkungsfasern (12);
**dadurch gekennzeichnet, dass**
c) das Anordnen von Folienbändchen (14) und Verstärkungsfasern (12) derart erfolgt, dass die Verstärkungsfasern (12) unidirektional verlaufen und dass die Folienbändchen (14) die Verstärkungsfasern (12) in ihrer Position in dem Faserverbund-Halbzeug (10) stabilisieren, wobei das Faserverbund-Halbzeug (10) als Gewebe (16) mit den Verstärkungsfasern (12) als Kettfäden (18) und den Folienbändchen (14) als Schussfäden (20) oder als Gelege (21) mit im Wesentlichen parallel verlaufenden Verstärkungsfasern (12), die mit einer Gegenlage aus Folienbändchen (14) verwirkt sind, oder als Geflecht (23), bei dem die Verstärkungsfasern (12) in eine erste Richtung und die Folienbändchen (14) in eine zu der ersten Richtung entgegengesetzte zweite Richtung geführt sind, ausgebildet wird.

2. Verfahren nach Anspruch 1,
**dadurch gekennzeichnet, dass** in Schritt a1) das Folienmaterial (44) mit einer Dickenerstreckung von 5 µm bis 60 µm bereitgestellt wird und/oder dass in Schritt a2) Folienbändchen (44) mit einer Breitenerstreckung von 0,5 mm bis 7 mm erzeugt werden und/oder dass in Schritt a3) die Temperaturbeaufschlagung in einem Bereich von 30 °C bis 250°C gewählt wird.

3. Verfahren nach einem der Ansprüche 1 oder 2,
**dadurch gekennzeichnet, dass** in Schritt a3) die Spannungsbeaufschlagung derart gewählt wird, dass sich die Folienbändchen (14) im Wesentlichen in ihrer Längenerstreckung (I) verdoppeln, in ihrer Dickenerstreckung halbieren und in ihrer Breitenerstreckung um etwa 2/3 reduzieren.

4. Verfahren nach einem der Ansprüche 1 bis 3,
**dadurch gekennzeichnet, dass** die Folienbändchen (14) entlang ihrer Längenerstreckung (I) mit Spannung beaufschlagt werden.

5. Verfahren nach einem der Ansprüche 1 bis 4,
**dadurch gekennzeichnet, dass** Schritt a2) vor Schritt a3) durchgeführt wird.

6. Verfahren nach einem der Ansprüche 1 bis 5,
**dadurch gekennzeichnet, dass** ein Folienmaterial (44) bereitgestellt wird, das während eines Infiltrationsprozesses eines Faserverbund-Halbzeugs (10) mit Matrixmaterial (26), insbesondere mit Hexflow RTM6 (28), unlösbar in dem Matrixmaterial (26) ist und/oder das sich während eines Härtungsprozesses zum Aushärten des Matrixmaterials (26) ganz oder teilweise auflöst und/oder aufschmilzt.

7. Verfahren nach einem der Ansprüche 1 bis 6,
**dadurch gekennzeichnet, dass** ein Folienmaterial (44) bereitgestellt wird, das einen ähnlichen E-Modul und/oder eine ähnliche Festigkeit hat wie ein für eine Infiltration gewähltes Matrixmaterial (26), insbesondere Hexflow RTM6 (28), wobei insbesondere die Mischung aus dem Folienbändchen (14) und Hexflow RTM6 (28) einen ähnlichen E-Modul und/oder eine ähnliche Festigkeit hat wie das für die Infiltration gewählte Matrixmaterial (26), insbesondere Hexflow RTM6 (28).

8. Verfahren nach einem der Ansprüche 1 bis 7,
**dadurch gekennzeichnet, dass** ein Folienmaterial (44) bereitgestellt wird, das mit wenigstens einem thermoplastischen Material (30) gebildet ist, das insbesondere aus der Gruppe ausgewählt ist, die Polyetherimid (32), Polyethersulfon (34), Polyetherethersulfon (36), Polyamid (38), Polysulfon (40) und Polyphenylsulfon (42) umfasst.

9. Verfahren nach einem der Ansprüche 1 bis 8,
**dadurch gekennzeichnet, dass** die Folienbändchen (14) derart gedehnt werden, dass abgerundete Kanten (54) und/oder Mikrorisse (56) entstehen.

10. Verfahren nach einem der Ansprüche 1 bis 9,
**dadurch gekennzeichnet, dass** die Folienbändchen (14) im Wesentlichen senkrecht, insbesondere in einem Winkel von 45° bis 90°, zu den Verstärkungsfasern (12) angeordnet werden.

## Claims

1. Method for manufacturing semi-finished fibre composites (10), comprising the steps:
a) producing film strips (14), comprising the steps of
a1) providing a film material (44);
a2) slitting the film material (44) to produce said film strips (14);
a3) stretching the film strips (14) by applying a defined tension and/or a defined temperature;
b) providing reinforcing fibres (12);
**characterized in that**
c) the arrangement of film strips (14) and reinforcing fibres (12) takes place in such a manner that said reinforcing fibres (12) run unidirectionally and that the film strips (14) stabilise the reinforcing fibres (12) in their position within the semi-finished fibre composite (10),
wherein said semi-finished fibre composite (10) is formed as a tissue (16) with the reinforcing fibres (12) as warp threads (18) and the film strips (14) as weft threads (20), or as a laid fabric (21) with reinforcing fibres (12) running essentially parallel, which are tangled with a counter layer of film strips (14), or as a braided fabric (23) in which the reinforcing fibres (12) are guided in a first direction and the film strips (14) are guided in a second direction opposite to said first direction.

2. Method according to claim 1,
**characterized in that** in step a1) said film material (44) is provided with a thickness extension of 5 µm to 60 µm and/or that in step a2) film strips (44) with a width extension of 0.5 mm to 7 mm are produced and/or that in step a3) a temperature loading within a range of 30°C to 250°C is chosen.

3. Method according to one of the claims 1 or 2,
**characterized in that** in step a3) the tension loading is chosen such that the film strips (14) essentially double in the longitudinal extension (I) thereof, are halved in thickness extension thereof, and are reduced by approx 2/3 in the width extension thereof.

4. Method according to one of the claims 1 to 3,
**characterized in that** the film strips (14) are loaded with tension along the longitudinal extension (I) thereof.

5. Method according to one of the claims 1 to 4,
**characterized in that** step a2) is performed prior to step a3).

6. Method according to one of the claims 1 to 5,
**characterized in that** a film material (44) is provided which during an infiltration process of a semi-finished fibre composite (10) with matrix material (26), in particular Hexflow RTM6 (28), is unsoluble in the matrix material (26) and/or which wholly or partly dissolves and/or melts during a curing process for curing the matrix material (26).

7. Method according to one of the claims 1 to 6,
**characterized in that** a film material (44) is provided which has an E-modulus and/or a strength similar to that of a matrix material (26) chosen for infiltration, in particular Hexflow RTM6 (28), wherein in particular the mixture of the film strip (14) and Hexflow RTM6 (28) has an E-modulus and/or a strength similar to that of the matrix material (26) chosen for infiltration, in particular Hexflow RTM6 (28).

8. Method according to one of the claims 1 to 7,
**characterized in that** a film material (44) is provided which is formed with at least one thermoplastic material (30) selected in particular from the group comprising polyetherimide (32), polyethersulfone (34), polyetherethersulfone (36), polyamide (38), polysulfone (40), and polyphenylsulfone (42).

9. Method according to one of the claims 1 to 8,
**characterized in that** the film strips (14) are stretched in such a manner that rounded edges (54) and/or microcracks (56) are produced.

10. Method according to one of the claims 1 to 9,
**characterized in that** the film strips (14) are arranged essentially perpendicularly, in particular at an angle of 45° to 90°, to the reinforcing fibres (12).

## Revendications

1. Procédé de réalisation de demi-produits (10) en matériau composite à fibres, comprenant les étapes consistant à :
a) réaliser des bandelettes de feuille (14), comprenant les étapes consistant à
a1) fournir un matériau en feuille (44) ;
a2) fendre le matériau en feuille (44) pour générer les bandelettes de feuille (14) ;
a3) étirer les bandelettes de feuille (14) par application d'une tension définie et/ou par application d'une température définie,
b) fournir des fibres de renforcement (12) ;
**caractérisé en ce que**
c) l'agencement des bandelettes de feuille (14) et des fibres de renforcement (12) s'effectue de telle sorte que les fibres de renforcement (12) s'étendent unidirectionnellement et **en ce que** les bandelettes de feuille (14) stabilisent les fibres de renforcement (12) dans leur position dans le demi-produit (10) en matériau composite à fibres,
dans lequel
le demi-produit (10) en matériau composite à fibres est réalisé en tant que tissu (16) avec les fibres de renforcement (12) à titre de fils de chaîne (18) et avec les bandelettes de feuille (14) à titre de fils de trame (20), ou en tant que nappe (21) ayant des fibres de renforcement sensiblement parallèles entrelacées avec une couche antagoniste de bandelettes de feuille (14), ou en tant que tressage (23) dans lequel les fibres de renforcement (12) sont menées dans une première direction et les bandelettes de feuille (14) sont menées dans une seconde direction opposée à la première direction.

2. Procédé selon la revendication 1,
**caractérisé en ce que** dans l'étape a1), le matériau en feuille (44) est fourni avec une extension en épaisseur de 5 µm à 60 µm, et/ou dans l'étape a2) les bandelettes de feuille (44) sont générées avec une extension en largeur de 0,5 mm à 7 mm, et/ou **en ce que** dans l'étape a3) l'application de la température est choisie dans une plage de 30 °C à 250 °C.

3. Procédé selon l'une des revendications 1 ou 2,
**caractérisé en ce que** dans l'étape a3), l'application de la tension est choisie de telle sorte que les bandelettes de feuille (14) sont doublées sensiblement dans leur extension en longueur (I), se partagent en deux dans leur extension en épaisseur et se réduisent d'environ 2/3 dans leur extension en largeur.

4. Procédé selon l'une des revendications 1 à 3,
**caractérisé en ce que** les bandelettes de feuille (14) sont sollicitées par une tension le long de leur extension longitudinale (I).

5. Procédé selon l'une des revendications 1 à 4,
**caractérisé en ce que** l'étape a2) est mise en oeuvre avant l'étape a3).

6. Procédé selon l'une des revendications 1 à 5,
**caractérisé en ce que** l'on fournit un matériau en feuille (44) qui, pendant un processus d'infiltration d'un demi-produit (10) en matériau composite à fibres par un matériau de matrice (26), en particulier un matériau Hexflow RTM6 (28), est insoluble dans le matériau de matrice (26), et/ou qui se dissout et/ou se fond complètement ou partiellement pendant un processus de durcissement pour durcir le matériau de matrice (26).

7. Procédé selon l'une des revendications 1 à 6,
**caractérisé en ce que** l'on fournit un matériau en feuille (44) qui présente un module de Young similaire et/ou une solidité similaire à celui/celle d'un matériau de matrice choisi pour une infiltration, en particulier Hexflow RTM6 (28), et en particulier le mélange de la bandelette de feuille (14) et le Hexflow RTM6 (28) présente un module de Young similaire et/ou une solidité similaire à celui/celle du matériau de matrice (26) choisi pour l'infiltration, en particulier Hexflow RTM6 (28).

8. Procédé selon l'une des revendications 1 à 7,
**caractérisé en ce que** l'on fournit un matériau en feuille (44) qui est formé avec au moins un matériau thermoplastique (30) qui est choisi en particulier parmi le groupe comprenant polyétherimide (32), polyéthersulfone (34), polyétheréthersulfone (36), polyamide (38), polysulfone (40) et polyphénylsulfone (42).

9. Procédé selon l'une des revendications 1 à 8,
**caractérisé en ce que** les bandelettes de feuille (14) sont étirées de telle sorte qu'il en résulte des arêtes arrondies (54) et/ou des microfissures (56).

10. Procédé selon l'une des revendications 1 à 9,
**caractérisé en ce que** les bandelettes de feuille (14) sont agencées sensiblement perpendiculairement, en particulier sous un angle de 45° à 90°, par rapport aux fibres de renforcement (12).
